# EUROPEAN PATENT SPECIFICATION

(11) **EP 4 269 839 B1**
(45) Date of publication and mention of the grant of the patent: **26.11.2025**
(21) Application number: 21870615.8
(22) Date of filing: 17.09.2021
(51) Int. Cl.: F16J 15/16, F16J 15/32, F27B 7/24, B01J 8/10, B01J 19/00

(54) **SEALING SYSTEM WITH AUTOMATIC COMPENSATION FOR THERMAL EXPANSION FOR A ROTARY CYLINDRICAL REACTOR**
DICHTUNGSSYSTEM MIT AUTOMATISCHER KOMPENSATION DER WÄRMEAUSDEHNUNG FÜR EINEN ROTIERENDEN ZYLINDRISCHEN REAKTOR
SYSTÈME D'ÉTANCHÉITÉ AUTOCOMPENSATEUR À DILATATION THERMIQUE POUR RÉACTEUR CYLINDRIQUE ROTATIF

(30) Priority: 24.09.2020 BR 102020019375
(43) Date of publication of application: 01.11.2023
(73) Proprietor: Tecnored Desenvolvimento Tecnologico S.A., CEP-12401-010 Pindamonhangaba São Paulo (BR)
(72) Inventor: BRASIL, Ludmila, Lopes, Nascimento, 22290-240 Rio de Janeiro, RJ (BR); DE OLIVEIRA, Ronald, Lopes, 12405-278 Pindamonhangaba, SP (BR); GONÇALVES, Guilherme Francisco, 12412-520 Pindamonhangaba, SP (BR); SOARES, Álvaro, Guedes, 13800-384 Mogi Mirim, SP (BR); FRÓIS, Fabrício, Tinôco, 12444-210 Pindamonhangaba, SP (BR); DA SILVA, Ezequiel, 12609-270 Lorena, SP (BR); POTTER, Stephen Michael, 22250-145 Rio de Janeiro, RJ (BR)
(74) Representative: Clarke, Modet y Cía., S.L.
(86) International application number: PCT/BR2021/050397
(87) International publication number: WO 2022/061434

(56) References cited:
- EP-A1- 0 676 554
- EP-B1- 2 510 265
- WO-A1-2006/000283
- WO-A1-2006/000283
- WO-A1-2020/126699
- AT-B- 397 861
- BR-A- 7 907 438
- JP-A- 2001 304 763
- US-A- 4 209 175
- US-A- 4 213 754
- US-A- 5 106 105
- US-A- 5 174 750
- US-A- 6 003 874
- US-A1- 2019 093 949
- US-B1- 7 686 612

## Description

### FIELD OF INVENTION

The present invention relates to thermal expansion self-compensating systems. In particular, to a self-compensating thermal expansion system in cylindrical rotating reactors.

### BASIS OF THE INVENTION

Among the most common applications of cylindrical rotating reactors are the drying of organic matter and food, biomass roasting and pyrolysis, and the treatment of mineral coals. In general, these processes require hermetic reactors, with a sealing system that prevents the entry of atmospheric air or the unintentional escape of reactant gases. In all these applications, in view of the temperature variations to which the reactor is subjected, it is difficult to seal it, taking into account the thermal expansion of the reactor and the fact that it has moving parts.

Several techniques for thermal expansion compensation in cylindrical rotating reactors are known today. Below are some of the documents that reveal such mechanisms.

Document BR112013008504-5 B1 describes a biomass torrefaction system comprising: (i) an inlet to receive the biomass particles; (ii) a reactor drum configured to rotate about an axis of rotation, the reactor drum having a plurality of vanes positioned therein at a plurality of locations along a longitudinal length of the reactor drum, the vanes disposed within the drum at selected positions and density to improve the characteristics of particles resulting from biomass subjected to torrefaction; (iii) a heat source upstream of the drum reactor to heat the gas contained in the system to a temperature sufficient to roast the biomass particles during operation; (iv) a fan device coupled to the system to create, when the system is in operation, a stream of heated gas through the drum reactor sufficient to intermittently transport the biomass particles along the longitudinal length of the drum reactor as the biomass particles are lifted through the vanes and poured through the stream of heated gas, while the drum reactor rotates; (v) and gas pipelines coupled to at least the drum reactor, heat source and blower device for recirculating at least a portion of the gas exiting the drum reactor back to the heat source to reheat the gas for reintroduction to the drum reactor. However, nothing is mentioned in document BR112013008504-5 B1 about cylindrical reactor thermal expansion self-compensating sealing mechanisms.

Document US20090007484 A1 describes an apparatus and a process for producing carbonaceous and/or hydrocarbon materials from a biomass composition, the apparatus including: (i) a charge port; (ii) a thermal decomposition assembly including a reactor comprising an inner hollow cylinder, an outer hollow cylinder, one of which is rotatable with respect to the other, both heated hollow cylinders supplying heat to the feed composition to convert it into a vapor fraction and a solid residue fraction; (iii) vanes mounted relative to the inner and outer hollow cylinders to move the biomass composition through the thermal decomposition assembly; (iv) at least one steam port to remove the steam fraction containing a hydrocarbon material; (v) and at least one solids gate to remove the solid fraction, containing a carbonaceous material. However, nothing is mentioned in document US20090007484 A1 about cylindrical reactor thermal expansion self-compensating sealing mechanisms.

Document US20030202756 A1 discloses a rotating heat treatment drum with a toothed edge arranged in the drum housing and supported at various peripheral points in the drum housing by evenly distributed bridge members. Each bridge member includes two clips spaced axially apart from each other and welded to the drum shell, and a cross plate that connects the clips and is radially away from the drum shell. Each cross plate is rigidly connected to one clip and slidably connected in the axial direction to the other clip, so that different degrees of thermal expansion and consequent deformation of the cross plates and increased stress on the cross plates, clips, and connection points can be compensated for. Document US20030202756 A1, however, does not address the issue of ensuring gas sealing to prevent ingress or egress from the rotating drum.

Document US5890814 A describes a rotating drum arrangement, in which the drum is mounted on support rings so that circumferential expansion and contraction of the drum relative to said support rings does not adversely affect the assembly. In a preferred mode, the drum blocks are mounted on the drum and the corresponding ring blocks are mounted on the support ring. The side surfaces of adj acent drum blocks and ring blocks support the weight of the drum in the ring. In this arrangement, gaps can be maintained between the drum and the support ring to allow for expansion and contraction of the drum. In the preferred mode, there is also a drive sprocket mounted on the drum with a sprocket mounting arrangement that also accommodates expansion and contraction of the drum. Also, in the US5890814 A document, the issue of rotating drum tightness is not discussed.

Thus, although documents US20030202756 A1 and US5890814 A reveal mechanisms to allow for thermal expansion of the cylindrical reactor, they have temperature gradient limitations, as they do not allow for large expansions of the cylinder.

Document AT 397861 B discloses a rotary kiln, in particular for the pyrolysis of waste products, with a kiln drum mounted axially movable on the bearing rollers, wherein on the one hand a charging pipe sits on a longitudinal slide with is axially displaceable along a path inclined towards the kiln drum and/or is articulated to a lifting cylinder and that on the other hand the discharge chamber is supported on a support bracket of the kiln part via a support slide and an actuator, which is also axially adjustable.

The present invention, therefore, aims at solving the problems mentioned above, since there is not a self-compensating thermal expansion system in the state of the art that is adapted to a cylindrical rotating reactor, which ensures the sealing between the moving and stationary parts of the equipment, and, therefore, the hermeticity of the reaction means, with a wide range of working temperatures, which ends up generating large expansion variations.

### SUMMARY OF THE INVENTION

The main objective of the present invention is to provide a self-compensating thermal expansion sealing system for a wide temperature range cylindrical rotating reactor, allowing higher thermal expansions when compared to the prior state of art.

In order to achieve the above described objectives, the present invention provides a self-compensating thermal expansion sealing system for a cylindrical rotating reactor comprising (a) a first self-compensating portion positioned at a first end of the cylindrical rotating reactor, the first self-compensating portion comprising (a.1) a guide ring fixed to the support structure of the cylindrical rotating reactor, (a.2) an axially sliding housing ring adjacent the guide ring, the axially sliding housing ring being sliding with respect to the guide ring in the axial direction, and (a.3) a first ring-shaped bearing race fixed to the rotating cylindrical reactor housing and supported on a first support roller, the first bearing race being sliding in the radial direction with respect to the axially sliding housing ring and integral with it in the axial direction of the cylindrical rotating reactor; and (b) a second self-compensating portion positioned at a second end of the cylindrical rotating reactor, opposite the first, the second self-compensating portion comprising (b.1) a housing ring fixed to the support structure of the cylindrical rotating reactor and (b.2) a second ring-shaped bearing race fixed to the housing of the cylindrical rotating reactor and supported on a second support roller, the second bearing race being rotatably sliding with respect to the fixed housing ring.

### BRIEF DESCRIPTION OF THE IMAGES

The detailed description presented below makes reference to the attached figures and their respective reference numbers.
**Figure 1** illustrates a side view of the cylindrical reactor comprising the self-compensating sealing system according to the preferred embodiment of the present invention.
**Figure 2** illustrates a detailed view of a first portion of a self-compensating sealing system according to a preferred embodiment of the present invention.
**Figure 3** illustrates a detailed view of a second portion of the self-compensating sealing system according to the preferred embodiment of the present invention.

### DETAILED DESCRIPTION OF THE INVENTION

Preliminarily, it is emphasized that the description that follows will start from preferred embodiments of the invention. As will be evident to anyone skilled in the subject, however, the invention is not limited to these particular embodiments.

The present invention solves the technical problem described above by providing a self-compensating thermal expansion sealing system for a cylindrical rotating reactor **2.** For the purposes of this description, a cylindrical rotating reactor **2** is defined as a cylindrical rotating body with openings at its ends.

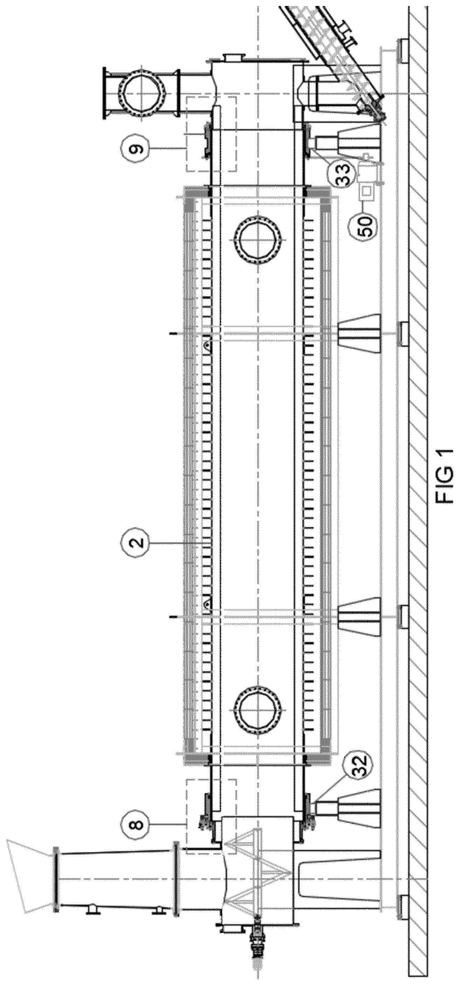

The system of the present invention, according to a preferred embodiment illustrated in **Figures 1** to **3****,** comprises a first self-compensating portion **8** positioned at a first end of the cylindrical rotating reactor **2,** and a second self-compensating portion **9** positioned at a second end of the rotating cylindrical reactor **2,** the second end of the rotating cylindrical reactor **2** being opposite of the first end.

According to a preferred embodiment of the present invention, the first self-compensating portion **8** further comprises a first ring-shaped bearing race **22** fixed to the housing of the cylindrical rotating reactor **2** and supported on a first support roller **32** which is responsible for slidably and rotationally supporting the first end of the rotating cylindrical reactor **2,** as shown in **Figure 1****.** At the opposite end, the second self-compensating portion **9** further comprises a first ring-shaped bearing race **23** attached to the housing of the cylindrical rotating reactor **2** and supported on a first support roller **33** that is responsible for slidably and rotationally supporting the first end of the rotating cylindrical reactor **2.**

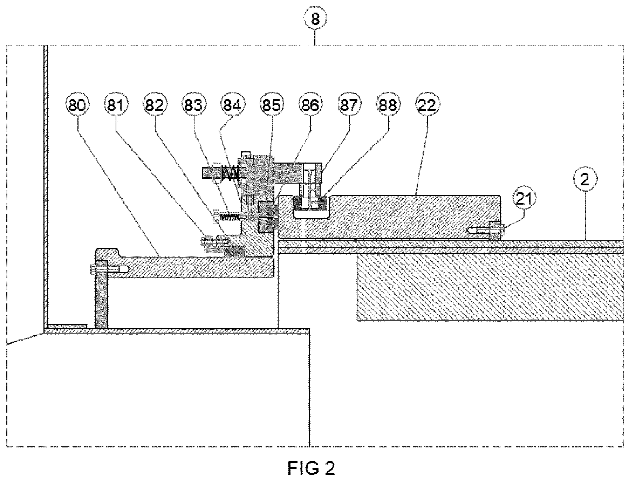

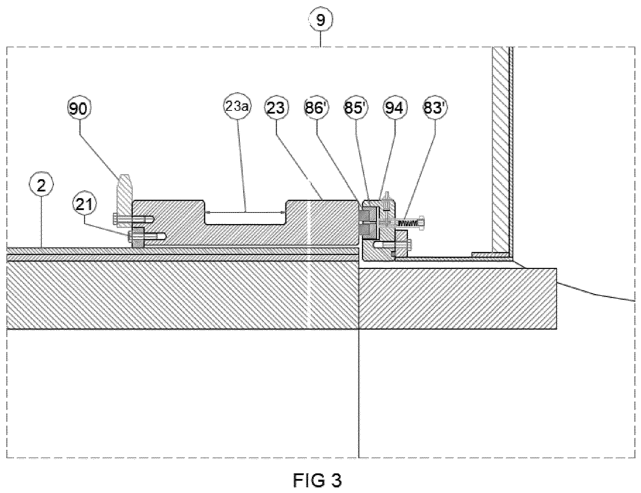

As can be seen in **figures 2** and **3****,** the bearing races **22** and **23,** respectively in the self-compensating portions **8** and **9,** have a fundamental distinction: bearing race **23** has a groove represented by the number **23a,** in distinction from runway **22** which is smooth. In this so-called groove **23a** of the bearing race **23** the bearing roller **33** is housed. In this way, no axial displacement is allowed to the bearing race **23** and the expansion (or contraction) of the cylindrical rotating reactor **2,** due to the heating (or cooling) thereof, is fully transferred to the self-compensating portion **8,** causing the bearing roller **32** to slide axially on the bearing race **22.**

Additionally, the first self-compensating portion **8** comprises a guide ring **80** attached to the support structure of the cylindrical rotating reactor **2.** The guide ring **80** is a stationary ring.

The first self-compensating portion **8** also comprises an axially sliding housing ring **84** surrounding the guide ring **80,** the axially sliding housing ring **84** being axially sliding with respect to the guide ring **80** and rotationally stationary with respect to the cylindrical rotating reactor. The fact that the axially sliding housing ring **84** is movable in the axial direction with respect to the guide ring **80** allows axial dilatation compensation of the cylindrical rotating reactor **2.** The axially sliding housing ring **84** houses a first dancing roller **85,** in which at least one first side seal gasket **86** is installed.

The second self- compensating portion **9** also comprises a housing ring, but this is a fixed housing ring **94,** which in turn houses a second dancing roller **85',** into which is fitted at least a second side seal **86'** .

The first bearing race **22** is slidable in the radial direction with respect to the axially sliding housing ring **84** and sympathetic to it in the axial direction of the cylindrical rotating reactor **2.**

Preferably, upon thermal expansion of the cylindrical rotating reactor **2,** the first bearing race **22** pushes the axially sliding housing ring **84** in the opposite direction to the second self-compensating portion **9.** When the cylindrical rotating reactor **2** contracts due to cooling, a track roller **88** attached to the upper portion of the axially sliding housing ring **84** by means of a track roller support **87** is responsible for sympathizing the movement of the first bearing race **22** with that of the axially sliding housing ring **84.** Thus, when the cylindrical rotating reactor **2** cools down, the first bearing race **22** "pulls" the axially sliding housing ring **84** toward the second self-compensating portion **9** by means of the guiding roller **88** and its respective guiding roller support **87.**

Preferably, the guiding roller **88** contacts a side surface of a recess of the first bearing raceway **22** and predisposes said axially sliding housing ring **84** towards the first bearing race **22.** Also, preferably, a plurality of guiding rollers **88** and guiding roller supports **87** are provided along the circumference of the axially sliding housing ring **84.**

Preferably, in the preferential implementation of the present invention, the first self-compensating portion **8** additionally comprises a first dancing roller **85** housed with a gap in a side cavity of the axially sliding housing ring **84,** the first dancing roller **85** being predisposed in the direction of a side face of the bearing race **22** by means of at least one elastic element. More preferably, at least one first side gasket **86** compressed between the first dancing roller **85** and the side face of the first bearing race **22** is provided. The dancing roller **85** is stationary and there is a dimensional gap between it and the side cavity of the axially sliding housing ring **84** where it is inserted. This gap allows the first dancing roller **85** to move and absorb any angular misalignment between the axis of the cylindrical rotating reactor **2** and the axis of its support structure. Preferably, the at least one elastic element is at least a first pin spring **83.** Still preferably, a plurality of first pin springs **83** are provided along the circumference of the axially sliding housing ring **84.**

Preferably, the first self-compensating portion **8** additionally comprises at least one lower gasket **82** compressed between the axially sliding housing ring **84** and the upper face of the guide ring **80.** Optionally, a press ring **81** attached to the axially sliding housing ring **84** through screws is provided to adjust the pressure of the at least one lower gasket **82.**

As can be seen in **Figure 3****,** the second self-compensating portion **9** is positioned at a second end of the cylindrical rotating reactor **2,** opposite to the first end. As mentioned above, the second self-compensating portion **9** comprises a fixed housing ring **94** fixed to the support structure of the cylindrical rotating reactor **2.**

Additionally, in accordance with a preferred embodiment of the present invention, the second self-compensating portion **9** further comprises a second ring-shaped bearing race **23** attached to the housing of the cylindrical rotating reactor **2** and supported on a second support roller **33** which is responsible for rotatably supporting the second end of the cylindrical rotating reactor **2,** as shown in **Figure 1****.**

The second bearing race **23** comprises a groove **23a** adapted to fit the respective second support roller **33.** The second support roller **33** works within this groove **23a,** so that it prevents the bearing race **23** from moving in the direction axial to the cylindrical rotating reactor **2.** All axial displacement due to the increased length of the rotating body is directed to the first self-compensating portion **8.** Since in the preferred embodiment of the present invention the first bearing race **22** does not have an equivalent recess, the first support roller **32** is allowed to slip axially along the first bearing race **22** whenever the rotating body is heated or cooled.

Preferably, the second self-compensating portion **9** further comprises a second dancing roller **85'** loosely housed in a side cavity of the fixed housing ring **94,** the second dancing roller **85'** being predisposed towards a side face of the second bearing race **23** by means of at least a second elastic element. More preferably, at least a second side gasket **86'** compressed between the second dancing roller **85'** and the side face of the second bearing race **23** is provided. The second dancer rolling**85'** is preferably identical to the first dancer rolling **85** described above, in order to move and absorb any angular misalignment between the axis of the cylindrical rotating reactor **2** and the axis of its support structure.

Preferably, the at least one elastic element is at least a second pin spring **83'.** Still preferably, a plurality of second pin springs **83'** are provided along the circumference of the fixed housing ring **94.**

Preferably, the first **22** and second **23** bearing races are attached to the surface of the cylindrical rotating reactor **2** by screwing into at least one attachment ring **21** attached to the surface of the cylindrical rotating reactor **2,** as shown in **Figures 2** and **3****.** Alternatively, the first **22** and second **23** bearing races are attached to the surface of the cylindrical rotating reactor **2** by welding to at least one centering attachment ring **21** attached to the surface of the cylindrical rotating reactor **2** (not shown).

Alternatively, the first **22** and second **23** bearing races are attached to the surface of the cylindrical rotating reactor **2** by direct welding to the surface of the cylindrical rotating reactor **2** (not shown). Alternatively, the first **22** and second **23** bearing races are attached to the surface of the cylindrical rotating reactor **2** by direct screwing to the surface of the cylindrical rotating reactor **2** (not shown).

Preferably, the cylindrical rotating reactor **2** is driven by a motor **50** whose shaft comprises at least one gear (not shown) engaged to a ring gear **90** attached to one of the bearing races **22, 23.** More preferably, the ring-shaped gear **90** is attached to the second bearing race **23.**

Therefore, as set forth above, the present invention provides a self-compensating thermal expansion sealing system for a wide temperature spectrum cylindrical rotating reactor, allowing higher thermal expansions when compared to the prior state of art.

Numerous variations affecting the scope of protection of the present application are allowed. Thus, it is reinforced that the present invention is not limited to the particular configurations/concretizations described above.

## Claims

1. A self-compensating thermal expansion sealing system for a cylindrical rotating reactor (2), comprising:
a first self-compensating portion (8) positioned at a first end of the cylindrical rotating reactor (2), the first self-compensating portion (8) comprising:
a guide ring (80) attached to the support structure of the cylindrical rotating reactor (2);
an axially sliding housing ring (84) adjacent to the guide ring (80), the axially sliding housing ring (84) being sliding with respect to the guide ring (80) in the axial direction; and
a first ring-shaped bearing race (22) attached to the housing of the cylinder rotating reactor (2) and supported on a first support roller (32), the first bearing race (22) being sliding in the radial direction with respect to the axially sliding housing ring (84) and supportable to it in the axial direction of the cylindrical rotating reactor (2), and
a second self-compensating portion (9) positioned at a second end of the cylindrical rotating reactor (2), opposite the first, the second self-compensating portion (9) comprising:
a fixed housing ring (94) fixed to the support structure of the cylindrical rotating reactor (2);
a second ring-shaped bearing race (23) attached to the cylindrical rotating reactor housing (2) and supported on a second support roller (33), the second bearing race (23) being rotatably sliding with respect to the fixed housing ring (94),
**characterized in that** the second bearing race (23) comprises a groove (23a) adapted for engagement with the respective second support roller (33).

2. System, according to claim 1, **characterized by** the first self-compensating portion (8) additionally comprising a first dancing roller (85) housed with a gap in a side cavity of the axially sliding axial housing ring (84), the first dancing roller (85) being predisposed in the direction of a side face of the first bearing race (22) by means of at least one first elastic element (83).

3. System, according to claim 1 or 2, **characterized by** that the second self-compensating portion (9) additionally comprises a second dancing roller (85') loosely housed in a side cavity of the fixed housing ring (94), the second dancing roller (85') being predisposed towards a side face of the second bearing race (23) by means of at least a second elastic element (83').

4. System, according to claim 2, **characterized by** that it additionally comprises at least one first side gasket (86) compressed between the first dancing roller (85) and the side face of the first bearing race (22).

5. System, according to claim 3, **characterized by** that it additionally comprises at least one second side gasket (86') compressed between the second dancing roller (85') and the side face of the second bearing race (23).

6. System, according to any of the claims 1 to 5, **characterized in that** it additionally comprises at least one lower gasket (82) compressed between the axially sliding housing ring (84) and the upper face of the guide ring (80).

7. System, according to any of the claims 1 to 6, **characterized by** the first self-compensating portion (8) comprising at least one guiding roll (88), each guiding roll (88) being fixed by support guide (87) to the upper portion of the axially sliding housing ring (84), the at least one guiding roller (88) contacting a side surface of a recess of the first bearing race (22) and predisposing the axially sliding housing ring (84) towards the first bearing race (22).

8. System, according to any of the claims 1 to 7, **characterized in** the first (22) and second (23) bearing races are attached to the surface of the cylindrical rotating reactor (2) by means of at least one of:
screwing into at least one attachment ring (21) attached to the surface of the cylindrical rotating reactor (2);
welding to at least one centering attachment ring (21) attached to the surface of the cylindrical rotating reactor (2);
direct welding to the surface of the cylindrical rotating reactor (2); and
direct screwing to the surface of the cylindrical rotating reactor (2).

## Patentansprüche

1. Selbstkompensierendes Dichtungssystem für Wärmeausdehnung für einen zylindrischen rotierenden Reaktor (2), umfassend:
einen ersten selbstkompensierenden Abschnitt (8), der an einem ersten Ende des zylindrischen rotierenden Reaktors (2) positioniert ist, wobei der erste selbstkompensierende Abschnitt (8) Folgendes umfasst:
einen Führungsring (80), der an der Trägerstruktur des zylindrischen rotierenden Reaktors (2) angebracht ist;
einen axial gleitenden Aufnahmering (84), der dem Führungsring (80) benachbart ist, wobei der axial gleitende Aufnahmering (84) in Bezug auf den Führungsring (80) in der axialen Richtung gleitet; und
eine erste ringförmige Lagerlaufbahn (22), die am Gehäuse des zylindrischen rotierenden Reaktors (2) angebracht ist und sich auf einer ersten Trägerrolle (32) abstützt, wobei die erste Lagerlaufbahn (22) in Bezug auf den axial gleitenden Aufnahmering (84) in radialer Richtung gleitet und in axialer Richtung des zylindrischen rotierenden Reaktors (2) an diesem abstützbar ist, und
einen zweiten selbstkompensierenden Abschnitt (9), der an einem zweiten Ende des zylindrischen rotierenden Reaktors (2) gegenüber dem ersten positioniert ist, wobei der zweite selbstkompensierende Abschnitt (9) Folgendes umfasst:
einen fixierten Aufnahmering (94), der an der Trägerstruktur des zylindrischen rotierenden Reaktors (2) fixiert ist;
eine zweite ringförmige Lagerlaufbahn (23), die an dem zylindrischen rotierenden Reaktorgehäuse (2) angebracht ist und sich auf einer zweiten Trägerrolle (33) abstützt, wobei die zweite Lagerlaufbahn (23) in Bezug auf den fixierten Aufnahmering (94) rotierend gleitet,
**dadurch gekennzeichnet, dass** die zweite Lagerlaufbahn (23) eine Nut (23a) umfasst, die zum Eingriff mit der jeweiligen zweiten Trägerrolle (33) angepasst ist.

2. System nach Anspruch 1, **dadurch gekennzeichnet, dass** der erste selbstkompensierende Abschnitt (8) zusätzlich eine erste Tänzerrolle (85) umfasst, die mit einem Spalt in einem seitlichen Hohlraum des axial gleitenden axialen Aufnahmerings (84) aufgenommen ist, wobei die erste Tänzerrolle (85) in Richtung einer Seitenfläche der ersten Lagerlaufbahn (22) mittels mindestens eines ersten elastischen Elements (83) vorgespannt ist.

3. System nach Anspruch 1 oder 2, **dadurch gekennzeichnet, dass** der zweite selbstkompensierende Abschnitt (9) zusätzlich eine zweite Tänzerrolle (85') umfasst, die lose in einem seitlichen Hohlraum des fixierten Aufnahmerings (94) aufgenommen ist, wobei die zweite Tänzerrolle (85') zu einer Seitenfläche der zweiten Lagerlaufbahn (23) mittels mindestens eines zweiten elastischen Elements (83') vorgespannt ist.

4. System nach Anspruch 2, **dadurch gekennzeichnet, dass** es zusätzlich mindestens eine erste Seitendichtung (86) umfasst, die zwischen der ersten Tänzerrolle (85) und der Seitenfläche der ersten Lagerlaufbahn (22) zusammengedrückt ist.

5. System nach Anspruch 3, **dadurch gekennzeichnet, dass** es zusätzlich mindestens eine zweite Seitendichtung (86') umfasst, die zwischen der zweiten Tänzerrolle (85') und der Seitenfläche der zweite Lagerlaufbahn (23) zusammengedrückt ist.

6. System nach einem der Ansprüche 1 bis 5, **dadurch gekennzeichnet, dass** es zusätzlich mindestens eine untere Dichtung (82) umfasst, die zwischen dem axial gleitenden Aufnahmering (84) und der Oberseite des Führungsrings (80) zusammengedrückt ist.

7. System nach einem der Ansprüche 1 bis 6, **dadurch gekennzeichnet, dass** der erste selbstkompensierende Abschnitt (8) mindestens eine Führungsrolle (88) umfasst, wobei jede Führungsrolle (88) durch eine Trägerführung (87) an dem oberen Abschnitt des axial gleitenden Aufnahmerings (84) fixiert ist, wobei die mindestens eine Führungsrolle (88) mit einer Seitenfläche einer Aussparung der ersten Lagerlaufbahn (22) in Kontakt steht und den axial gleitenden Aufnahmering (84) zu der ersten Lagerlaufbahn (22) vorspannt.

8. System nach einem der Ansprüche 1 bis 7, **dadurch gekennzeichnet, dass** die erste (22) und die zweite (23) Lagerlaufbahn an der Oberfläche des zylindrischen rotierenden Reaktors (2) mittels mindestens eines der Folgenden angebracht sind:
Einschrauben in mindestens einen Befestigungsring (21), der an der Oberfläche des zylindrischen rotierenden Reaktors (2) angebracht ist;
Anschweißen an mindestens einen zentrierenden Befestigungsring (21), der an der Oberfläche des zylindrischen rotierenden Reaktors (2) angebracht ist;
direktes Schweißen auf die Oberfläche des zylindrischen rotierenden Reaktors (2); und
direktes Verschrauben mit der Oberfläche des zylindrischen rotierenden Reaktors (2).

## Revendications

1. Système d'étanchéité à dilatation thermique auto-compensée pour un réacteur cylindrique rotatif (2), comprenant :
une première partie auto-compensée (8) disposée à une première extrémité du réacteur cylindrique rotatif (2), ladite première partie auto-compensée (8) comprenant :
un anneau de guidage (80) fixé à la structure de support du réacteur cylindrique rotatif (2) ;
un anneau de logement à coulissement axial (84) adjacent à l'anneau de guidage (80), ledit anneau de logement à coulissement axial (84) étant coulissant par rapport à l'anneau de guidage (80) dans la direction axiale ; et
une première piste de roulement annulaire (22) fixée au carter du réacteur cylindrique rotatif (2) et supportée sur un premier galet de support (32), ladite première piste de roulement (22) étant coulissante dans la direction radiale par rapport à l'anneau de logement à coulissement axial (84) et pouvant être supportée par celui-ci dans la direction axiale du réacteur cylindrique rotatif (2), et
une seconde partie auto-compensée (9) disposée à une seconde extrémité du réacteur cylindrique rotatif (2), opposée à la première, ladite seconde partie auto-compensée (9) comprenant :
un anneau de logement fixe (94) fixé à la structure de support du réacteur cylindrique rotatif (2) ;
une seconde piste de roulement annulaire (23) fixée au carter du réacteur cylindrique rotatif (2) et supportée sur un second galet de support (33), ladite seconde piste de roulement (23) étant rotativement coulissante par rapport à l'anneau de logement fixe (94),
**caractérisé en ce que** la seconde piste de roulement (23) comprend une gorge (23a) adaptée pour l'engagement avec ledit second galet de support (33).

2. Système selon la revendication 1, **caractérisé en ce que** la première partie auto-compensée (8) comprend en outre un premier galet flottant (85) logé avec un jeu dans une cavité latérale de l'anneau de logement à coulissement axial (84), ledit premier galet flottant (85) étant précontraint en direction d'une face latérale de la première piste de roulement (22) au moyen d'au moins un premier élément élastique (83).

3. Système selon la revendication 1 ou 2, **caractérisé en ce que** la seconde partie auto-compensée (9) comprend en outre un second galet flottant (85') logé librement dans une cavité latérale de l'anneau de logement fixe (94), ledit second galet flottant (85') étant précontraint vers une face latérale de la seconde piste de roulement (23) au moyen d'au moins un second élément élastique (83').

4. Système selon la revendication 2, **caractérisé en ce qu'**il comprend en outre au moins un premier joint latéral (86) comprimé entre le premier galet flottant (85) et la face latérale de la première piste de roulement (22).

5. Système selon la revendication 3, **caractérisé en ce qu'**il comprend en outre au moins un second joint latéral (86') comprimé entre le second galet flottant (85') et la face latérale de la seconde piste de roulement (23).

6. Système selon l'une quelconque des revendications 1 à 5, **caractérisé en ce qu'**il comprend en outre au moins un joint inférieur (82) comprimé entre l'anneau de logement à coulissement axial (84) et la face supérieure de l'anneau de guidage (80).

7. Système selon l'une quelconque des revendications 1 à 6, **caractérisé en ce que** la première partie auto-compensée (8) comprend au moins un galet de guidage (88), chaque galet de guidage (88) étant fixé par un support de guidage (87) à la partie supérieure de l'anneau de logement à coulissement axial (84), le ou lesdits galets de guidage (88) venant en contact avec une surface latérale d'un évidement de la première piste de roulement (22) et prédisposant l'anneau de logement à coulissement axial (84) vers la première piste de roulement (22).

8. Système selon l'une quelconque des revendications 1 à 7, **caractérisé en ce que** les première (22) et seconde (23) pistes de roulement sont fixées à la surface du réacteur cylindrique rotatif (2) au moyen d'au moins l'un des éléments suivants :
vissage dans au moins un anneau de fixation (21) fixé à la surface du réacteur cylindrique rotatif (2) ;
soudage à au moins un anneau de fixation de centrage (21) fixé à la surface du réacteur cylindrique rotatif (2) ;
soudage direct à la surface du réacteur cylindrique rotatif (2) ; et
vissage direct à la surface du réacteur cylindrique rotatif (2).
